# EUROPÄISCHE PATENTSCHRIFT

(11) **EP 1 273 553 B1**
(45) Veröffentlichungstag und Bekanntmachung des Hinweises auf die Patenterteilung: **14.09.2005**
(21) Anmeldenummer: 02014781.5
(22) Anmeldetag: 04.07.2002
(51) Int. Cl.: C01B 3/38, C01B 3/48, B01J 8/04, C01B 3/58, H01M 8/06, F28D 7/00

(54) **Verfahren zum Betrieb eines Apparats zur Erzeugung von Wasserstoff und Apparate zur Durchführung der Verfahren**
Process for operating an apparatus for generation of hydrogen and apparatus used in this process
Procédé de fonctionnement d'un dispositif de génération d'hydrogène et dispositif utilisé dans ce procédé

(30) Priorität: 05.07.2001 DE 10132064
(43) Veröffentlichungstag der Anmeldung: 08.01.2003
(73) Patentinhaber: Viessmann Werke GmbH & Co KG, 35107 Allendorf (DE)
(72) Erfinder: Heikrodt, Klaus, Dr., 35108 Allendorf (DE); Dzubiella, Manfred, Dr., 35066 Frankenberg (DE); Britz, Peter, Dr., 35066 Frankenberg (DE); Zartenar, Nicolas, 45897 Gelsenkirchen (DE); Holtorf, Jürgen, Dr., 35039 Marburg (DE)
(74) Vertreter: Wolf, Günter

(56) Entgegenhaltungen:
- EP-A- 0 887 306
- US-A- 3 909 299
- US-A- 5 110 559
- US-A- 6 096 106
- PATENT ABSTRACTS OF JAPAN vol. 2000, no. 21, 3. August 2001 (2001-08-03) & JP 2001 106506 A (MITSUBISHI ELECTRIC CORP), 17. April 2001 (2001-04-17)
- PATENT ABSTRACTS OF JAPAN vol. 006, no. 042 (E-098), 16. März 1982 (1982-03-16) & JP 56 159069 A (HITACHI LTD), 8. Dezember 1981 (1981-12-08)

## Beschreibung

Die Erfindung betrifft drei Verfahren zum Betrieb eines Apparats zur Erzeugung von Wasserstoff gemäß den Oberbegriffen der nebengeordneten Ansprüche 1, 4 und 6, sowie einen Apparat zur Durchführung des dritten Verfahrens gemäß dem Anspruch 8.

Die einleitend in den Oberbegriffen der nebengeordneten Ansprüche genannten apparativen Komponenten sind im anlagentechnischen Maßstab zur Erzeugung von Wasserstoff bekannt. Diesbezüglich wird auf Nerlich, TAB 8/2000, S. 30, Bild 2 und auf US 5,110,559 A verwiesen, gemäß dem auch die in den Oberbegriffen der Ansprüche 1, 10 und 15 angeführte stationäre Betriebsweise üblich ist.

Zum Starten des Reformers wird dieser, soweit bekannt zunächst ohne Kohlenwasserstoffgas (als Edukt) auf Betriebstemperatur gebracht, und zwar dadurch, dass ein Inertgas, bspw. Stickstoff, über die Eduktzufuhr zum mittels Brenner erhitzten Reformer und anschließend durch die Katalysatorstufen geführt wird. Sobald dann der gesamte Apparat die erforderliche Betriebstemperatur erreicht hat, werden dem Reformer die Edukte Wasser und Kohlenwasserstoffgas (in der Regel Erdgas), zugeführt, um dort aufgrund einer katalytischen Reaktion in Wasserstoff und weitere Reformer-Produkte umgewandelt zu werden.

Ein Anfahren des Reformers ohne vorherige Aufheizung der Anlagenkomponenten auf die erforderliche Betriebstemperatur ist dabei praktisch nicht möglich, da die Katalysatoren nur bei Betriebstemperatur eine chemische Reaktion zwischen den beteiligten Gasen hervorrufen können.

In letzter Zeit sucht man allerdings auch nach Möglichkeiten, die Gasreformierung im häuslichen Bereich betreiben zu können, da der Einsatz von Brennstoffzellen eine interessante Alternative zur Verwendung von herkömmlichen Heizgeräten, wie Gas- oder Ölbrennern darstellt.

Die Übertragung der aus dem Anlagenbau bzw. Forschungslabor bekannten Technik auf den häuslichen Bereich bringt aber das Problem mit sich, dass zum Anfahren des Reformerprozesses stets ein Inertgas bereitgestellt werden müsste, was einerseits kostenintensiv andererseits aber auch insbesondere hinsichtlich der Handhabbarkeit eines solchen Apparats nachteilig wäre.

Der Erfindung liegt demgemäß die Aufgabe zugrunde, ein Verfahren für ein Gasaufbereitungssystem und ein solches System zur Durchführung des Verfahrens zur Verfügung zu stellen, mit dem auf möglichst einfache und schnelle Weise Betriebstemperatur der Anlagenkomponenten erreichbar ist, und zwar insbesondere ohne Zufuhr eines zusätzlich zuzuführenden, separat gelagerten Inert- bzw. Hilfsgases.

Diese Aufgabe wird verfahrensmäßig jeweils durch die in den Kennzeichen der nebengeordneten Ansprüche 1, 4 und 6 genannten Merkmale gelöst. Vorrichtungsmäßig lösen die Merkmale des Kennzeichens des nebengeordneten Anspruchs 8 diese Aufgabe.

### Variante I:

Der Kern der ersten erfindungsgemäßen Lösung besteht nach Anspruch 1 also darin, das ohne darin am Reformerprozess beteiligte Wasser als Inertgasersatz zum Vorheizen des Apparats zu verwenden. Die Startphase des Reformerprozesses unterscheidet sich vom stationären Betrieb also lediglich darin, dass dem Reformer zunächst lediglich Wasser, jedoch kein Kohlenwasserstoffgas zugeführt wird, d.h. im Reformer erfolgt während der Startphase noch keine Umwandlung in Wasserstoff und weitere Reformer-Produkte.

Das dem Reformer vorzugsweise über die Eduktzufuhrstrecke zugeführte Wasser wird im Reformer mittels des Brenners oder vorzugsweise bereits in seiner Zuführung verdampft und in Dampfform durch die mindestens eine Katalysatorstufe geleitet bis diese und auch der Reformer Betriebstemperatur erreicht haben. Sobald sich dieser Zustand eingestellt hat (was über entsprechende Temperatursensoren ermittelbar ist), wird die Kohlenwasserstoffgaszufuhr zur Eduktzufuhrstrecke geöffnet, so dass nach und nach zusammen mit dem nach wie vor zugeführten Wasserdampf der Umwandlungsprozess unter optimalen thermodynamischen und reaktionskinetischen Bedingungen im Reformer beginnen kann. Der entstehende Produktstrom ist dabei von einer Güte, die eine sofortige Verwendung, beispielsweise in einer Brennstoffzelle, zulässt.

Da die beim bisher üblichen Startvorgang mit Stickstoff verwendeten Katalysatorstufen unter Umständen einer Beaufschlagung mit auskondensiertem Wasser mechanisch nicht standhalten würden (es besteht die Gefahr von Absplitterungen am Katalysator beim Verdampfen), ist ferner vorteilhaft vorgesehen, dass Katalysatoren (also auch die des Reformers) mit wasserunempfindlicher Edelmetallbeschichtung verwendet werden.

Hinsichtlich der Vorheizung der Reformer-Edukte, und zwar unabhängig davon, ob zunächst in der Startphase lediglich das Wasser oder im stationären Betrieb später auch das Kohlenwasserstoffgas vorgeheizt werden soll, ist vorteilhaft vorgesehen, die aus reaktionskinetischen Gründen zwischen dem Reformer und der mindestens einen Katalysatorstufe abzuführende Wärme über einen bzw. zwei Wärmetauscher an die Eduktzufuhrstrecke zu übertragen. Um dabei gleich zu Beginn der Startphase zur Vermeidung von Beschädigungen sicherzustellen, dass das Wasser den Katalysator des Reformers dampfförmig erreicht, ist ferner an der Wasserzuführung, vorzugsweise also an der Eduktzufuhrstrecke, ein Verdampfer angeordnet, was an einem Ausführungsbeispiel noch näher erläutert wird.

### Variante II:

Der Kern der zweiten erfindungsgemäßen Lösung besteht nach Anspruch 4 darin, dem Reformer zum Starten des Apparats über einen Zufuhranschluss Umgebungsluft zuzuführen, die durch den in der Nähe des Reformers angeordneten Brenner erwärmt wird und ihrerseits somit die mindestens eine dem Reformer in Strömungsrichtung nachgeschaltete Katalysatorstufe vorheizt, bis alle Komponenten auf Betriebstemperatur gebracht sind. Nach Erreichen dieser Temperatur wird dann die Zufuhr der Luft zum Reformer bzw. zur Katalysatorstufe unterbunden, dafür aber die Eduktzufuhr geöffnet, so dass der Reformierungsprozess unmittelbar unter stationären Betriebsbedingungen ablaufen kann.

Bei der Verwendung von Luft als Aufheizmedium ist es dabei zwingend erforderlich, den gesamten Apparat mit speziellen Edelmetall-Katalysatoren auszurüsten, da die bisher verwendeten Katalysatoren, soweit bekannt, ansonsten durch den Sauerstoff der Luft oxidiert und damit katalytisch deaktiviert würden.

Hinsichtlich der Zuführung der Edukte und des Aufheizmediums zum Reformer hat es sich als vorteilhaft erwiesen, den Zufuhranschluss am Reformer gemeinsam zu nutzen, d.h. während der Startphase wird der Anschluss zur Zufuhr der Luft und im stationären Betrieb zur Zufuhr der Edukte genutzt. Zweckmäßiger Weise ist dazu dem Zufuhranschluss ein T-Rohrstück vorgeschaltet, das diesen einerseits mit der Luftzufuhrleitung und andererseits mit einer vorheizbaren Eduktzufuhrstrecke verbindet.

Die Zufuhr der Luft zum Reformer erfolgt vorteilhaft aufgrund einer Sogwirkung des Gasbrenners, was noch genauer erläutert wird.

### Variante III:

Der Kern der dritten erfindungsgemäßen Lösung besteht nach den Ansprüchen 6 und 8 schließlich darin, das beim Brennerbetrieb ohnehin entstehende heisse Abgas zur Aufheizung des Reformers und der mindestens einen Katalysatorstufe zu nutzen. Dazu wird beim Starten die Zufuhr von Kohlenwasserstoffgas und Wasser am Reformer unterbunden, d.h. mangels eines Eduktstromes kommt es in der Startphase weder im Reformer noch in der mindestens einen Katalysatorstufe zu den im stationären Betrieb erwünschten chemischen Umwandlungsprozessen. Stattdessen wird mittels des heissen Abgases zunächst der ohnehin in der Nähe des Brenners befindliche Reformer und anschließend (nach entsprechender Abgasführung) die mindestens eine Katalysatorstufe auf Betriebstemperatur aufgeheizt. Sobald diese Temperatur erreicht ist (ebenfalls wieder über entsprechende Messsensoren erfassbar), wird die Zufuhr von Kohlenwasserstoffgas und Wasser zum Reformer geöffnet, so dass sich in diesem nunmehr der Reformierungsprozess, bei dem diese Edukte in Wasserstoff und weitere Reformerprodukte, wie Kohlendioxid und Kohlenmonoxid, umwandelt werden, in Gang setzt. Damit das auch nach der Startphase vom Brenner abgegebene Abgas dabei nicht weiter zur Erwärmung der während der Reformierung selbst wärmeabgebenden Katalysatorstufe beiträgt, ist, was weiter unten noch näher erläutert wird, in der erfindungsgemäßen Abgasführung eine einstellbare Verzweigung (Stellklappe) vorgesehen, die es ermöglicht, das heiße Abgas nach der Passage des Reformers aus dem Apparat abzuführen.

Darüber hinaus hat es sich bei dieser dritten Lösungsvariante als wesentlich erwiesen, dass beim Starten des Apparats dem Reformer zum Schutz vor Überhitzung über einen Zufuhranschluss zusätzlich Luft zugeführt wird. Diese Maßnahme verhindert insbesondere bei leistungsstarken Brennern, dass der Reformer gleich nach dem Brennerstart - also in der Startphase ohne Eduktstrom - überhitzt bzw. beschädigt wird, nämlich dadurch, dass die in den Reformer eingeleitet Luft einen Wärmeabtransport aus dem Reformer zur mindestens einen Katalysatorstufe hin ermöglicht. Da die Katalysatoren aber (wie erläutert) in der Regel gegenüber Sauerstoff empfindlich reagieren, ist bei dieser Ausführungsform ergänzend vorgesehen, die Katalysatoren edelmetallbeschichtet auszubilden.

Vorteilhafte Weiterbildungen ergeben sich aus den jeweiligen Unteransprüchen.

Die erfindungsgemäßen Verfahren und Apparate gemäß der Lösungsvarianten I, II und III einschließlich ihrer vorteilhaften Weiterbildungen werden nachfolgend anhand der zeichnerischen Darstellung von Ausführungsbeispielen näher erläutert.

Es zeigt
- Fig. 1: schematisch eine Ausführungsform der erfindungsgemäßen Lösungsvariante I;
- Fig. 2: schematisch im Schnitt eine Ausführungsform der erfindungsgemäßen Lösungsvariante II und
- Fig. 3: schematisch im Schnitt eine Ausführungsform der erfindungsgemäßen Lösungsvariante III.

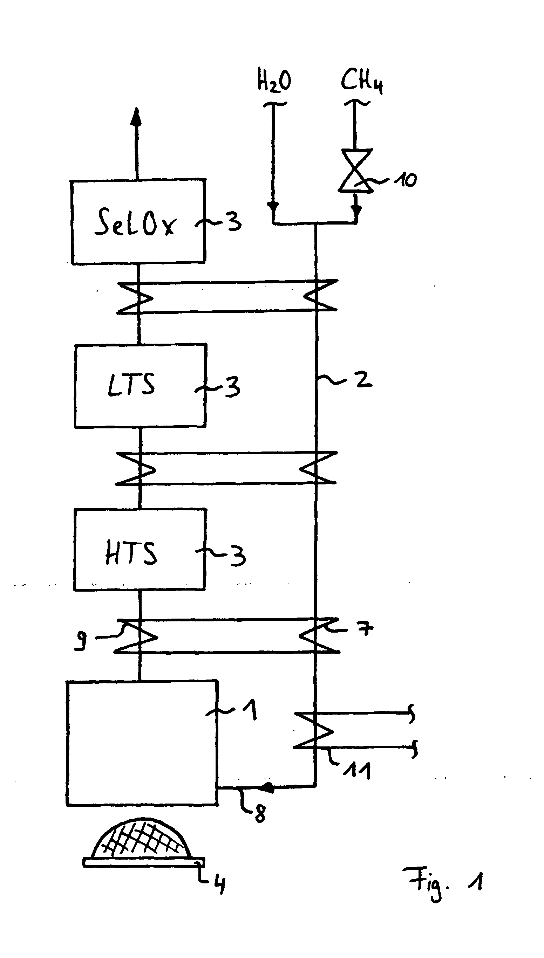

In Fig. 1 ist ein Apparat zur Erzeugung von Wasserstoff dargestellt, der aus einen allotherm arbeitenden, d.h. hier mit einem Gasbrenner 4 versehenen Reformer 1 zur Umwandlung von über eine vorbeheizte Eduktzufuhrstrecke 2 zugeführtem Kohlenwasserstoffgas und Wasser in Wasserstoff und weitere Reformer-Produkte besteht, wobei dem Reformer 1 beim dargestellten Ausführungsbeispiel zur chemischen Aufbereitung der Reformer-Produkte drei Katalysatorstufen 3 (eine sogenannte Hochtemperatur-Shiftstufe HTS, eine Niedertemperatur-Shiftstufe LTS und eine SelOx-Stufe) nachgeschaltet sind.

Für diesen Apparat ist vorrichtungsmäßig nun wesentlich, dass am Reformer 1 eine Zuführung 8 vorgesehen ist, über die diesem während der Startphase des Apparats ausschließlich Wasser zuführbar ist, wobei sowohl der Reformer 1 als auch die Katalysatorstufen 3 vorzugsweise edelmetallbeschichtet ausgebildet sind. Im stationären Betrieb, d.h. also wenn alle Komponenten Betriebstemperatur erreicht haben, werden dem Reformer 1, wie erläutert, beide Edukte, also Wasser und Kohlenwasserstoffgas, zugeführt, so dass dieser dann unter thermodynamisch wie reaktionskinetisch optimalen Bedingungen Wasserstoff erzeugen kann.

Bezüglich der Wasser-Zuführung 8 ist dabei vorzugsweise vorgesehen, dass diese von der Eduktzufuhrstrecke 2 gebildet wird bzw. gerade dieser entspricht, wobei an der Eduktzufuhrstrecke 2 in diesem Fall ein Absperrmittel 10, vorzugsweise ein elektronisch gesteuertes Ventil, angeordnet ist, um während der Startphase die Zufuhr von Kohlenwasserstoffgas unterbinden zu können.

Hinsichtlich der Vorheizung des Wassers während der Startphase ist vorzugsweise vorgesehen, dass an der Zuführung 8 bzw. an der Eduktzufuhrstrecke 2 ein Verdampfer 11 angeordnet ist, der, wie dargestellt, beispielsweise als Wärmetauscher eines weiteren Heizkreislaufes ausgebildet sein kann. Dieser Verdampfer 11 stellt zum Schutz der Katalysatoren sicher, dass das Wasser auf jeden Fall vor dem Eintritt in den Reformer 1 dampfförmig ist.

Ferner ist zur Vorheizung des Wassers und für den stationären Betrieb auch zur Vorheizung des Kohlenwasserstoffgases vorteilhaft vorgesehen, dass die Eduktzufuhrstrecke 2 mit einem an diese Wärme abgebenden Wärmetauscher 7 versehen ist, wobei dieser Wärmetauscher 7 wiederum vorzugsweise, gewissermaßen zur Wärmerückgewinnung thermisch mit einem zwischen dem Reformer 1 und der Hochtemperatur-Katalysatorstufe 3 angeordneten, den Reformer-Produkten Wärme entziehenden Wärmetauscher 9 verbunden ist. Bei Bedarf und bei Verwendung mehrerer Shiftstufen können, wie dargestellt, auch mehrerer dieser Wärmetauscherverbindungen mit der Eduktzufuhrstrecke 2 gebildet werden.

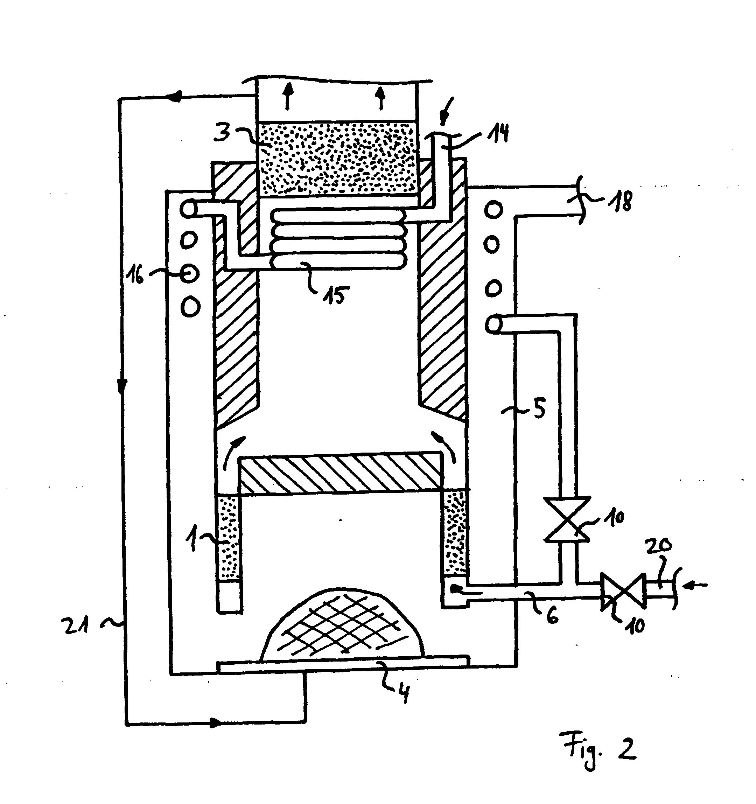

In Fig. 2 ist eine Ausführungsform des Apparat zur Erzeugung von Wasserstoff gemäß der Lösungsvariante II dargestellt. Dieser umfasst ebenfalls einen allotherm arbeitenden, d.h. hier mit einem Gasbrenner 4 versehenen Reformer 1 zur Umwandlung von Kohlenwasserstoffgas und Wasser in Wasserstoff und weitere Reformer-Produkte. Dem Reformer 1 ist zur chemischen Aufbereitung der Reformer-Produkte bei dieser dargestellten Ausführungsform, was aber nicht zwingend ist, lediglich eine Katalysatorstufe 3 nachgeschaltet.

Für diesen Apparat ist vorrichtungsmäßig nun wesentlich, dass am Reformer 1 ein Zufuhranschluss 6 vorgesehen ist, über den diesem während der Startphase des Apparats ausschließlich Luft zuführbar ist, wobei der Reformer 1 und die mindestens eine Katalysatorstufe 3 edelmetallbeschichtet ausgebildet sind, um nicht von der zum Vorheizen verwendeten Umgebungsluft beschädigt zu werden.

Dieser Apparat wird, wie folgt, betrieben: Über den Eduktzufuhranschluss 14 wird dem Apparat Wasser und Kohlenwasserstoffgas zugeführt. In der Startphase gelangen diese Edukte (über einen zentral oberhalb des Reformers angeordneten Spiralwärmetauscher 15 und einen den Kernbereich des Apparats umschliessenden Wendelwärmetauscher 16) allerdings nur bis zu einem kurz vor dem Zufuhranschluss 6 angeordneten Ventil (Absperrmittel 10), das eine Zuströmung der Edukte zum Reformer und damit den Beginn des Reformierungsprozesses verhindert. Stattdessen wird dem Reformer beim Starten ausschließlich sich gegenüber den edelmetallbeschichteten Katalysatoren inert verhaltende Luft zugeführt, die einerseits die vom auch während der Startphase laufenden Brenner kommende Wärme aufnimmt, so dass der sich auf diese Weise gleichmäßig aufheizende Reformer nicht überhitzt wird, und die andererseits beim Weiterströmen den Spiralwärmetauscher 15 und vorallem die nachgeschaltete Katalysatorstufe 3 auf Betriebstemperatur bringt.

Das Abgas des Gasbrenners 4 strömt bei dieser Lösungsvariante II seitlich über einen konzentrischen Ringspalt am Reformer 1 vorbei. Dabei wird der ringförmig ausgebildete Reformer 1 beidseitig vom heissen, abströmenden Abgas erwärmt. Im weiteren Abgas-Abströmbereich nach dem Reformer 1 schließt sich ein Ringspaltraum an, in dem die Rohre des Wendelwärmetauschers 16 angeordnet sind. Das inzwischen etwas kältere Abgas wird also wirkungsgradoptimierend zum Vorheizen der Edukte verwendet, die darüber hinaus aber auch mittels des dem Wendelwärmetauscher 16 vorgeschalteten und im Strömungsbereich der Reformer-Produkte angeordneten Spiralwärmetauschers 15 vorgeheizt werden.

Um dem Reformer die Vorwärmluft während der Startphase nicht mit einem separaten Gebläse zuführen zu müssen, ist ferner vorteilhaft vorgesehen, den Luftanschluss des Gasbrenners 4 mittels einer Verbindungsleitung 21 mit der Gasführungsstrecke der Reformer-Produkte zu verbinden, um in dieser eine Sogwirkung hervorzurufen, die ein Lufteinsaugen am Luftanschluss 20 bewirkt. Beim Übergang zum stationären Betrieb muss dabei aber dafür gesorgt sein, dass der Apparat von Luft befreit ist, da andernfalls beim Zusammentreffen mit dem entstehenden Wasserstoff eine Knallgasreaktion erfolgen könnte.

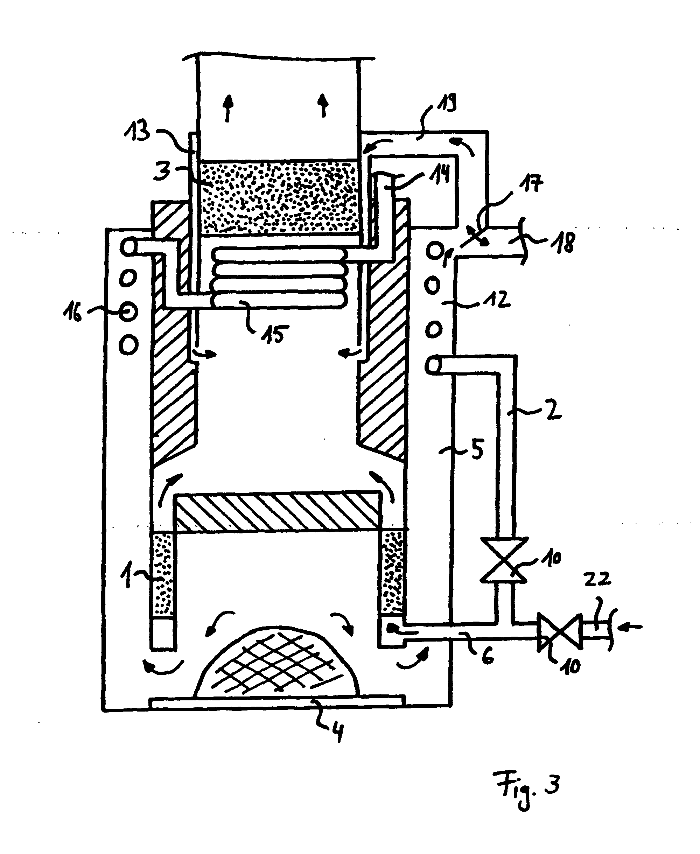

In Fig. 3 ist schließlich eine Ausführungsform des Apparat zur Erzeugung von Wasserstoff gemäß der Lösungsvariante III dargestellt. Dieser umfasst ebenfalls einen allotherm arbeitenden, mit einem Gasbrenner 4 versehenen Reformer 1 zur Umwandlung von Kohlenwasserstoffgas und Wasser in Wasserstoff und weitere Reformer-Produkte, wobei dem Reformer 1 zur chemischen Aufbereitung der Reformer-Produkte mindestens eine Katalysatorstufe 3 nachgeschaltet ist.

Für diesen Apparat ist vorrichtungsmäßig nun wesentlich, dass eine dem Gasbrenner 4 nachgeschaltete Abgasführung 5 wahlweise mit der mindestens einen Katalysatorstufe 3 verbindbar ausgebildet ist. Zum Starten des Apparats wird vom Gasbrenner 4 kommendes Abgas also solange - bei gleichzeitiger Unterbindung der Eduktzufuhr zum Reformer - über die Abgasführung 5 der Katalysatorstufe 3 zugeführt, bis sowohl der vom Gasbrenner 4 mitaufgeheizte Reformer 1 und als auch die Katalysatorstufe 3 Betriebstemperatur erreicht haben.

Konstruktiv ist dabei vorteilhaft vorgesehen, dass die Abgasführung 5 in den Strömungsbereich der Reformer-Produkte zwischen dem Reformer 1 und der Katalysatorstufe 3 ausmündet. Wie aus Fig. 3 ersichtlich, besteht zu diesem Zweck die Abgasführung aus zwei zueinander konzentrisch angeordneten Ringspalträumen 12, 13, die über eine Verbindungsleitung 19 miteinander verbunden sind. Dabei ist die Verbindungsleitung 19 mit einer Stellklappe 17 zur Aufteilung des Abgasstroms in zwei Teilströme versehen, nämlich einen Teilstrom zur Katalysatorstufe 3 und einen Teilstrom zu einem Abgasabfuhranschluss 18. Je nach Betriebszustand kann also entweder der gesamte Abgasstrom (zu Beginn der Startphase), ein Teil des Abgasstromes (während der Startphase) oder überhaupt kein Abgas (im stationären Betrieb) zur Katalysatorstufe geführt werden.

Um den Reformer 1 vor einer Überhitzung während der Startphase zu schützen, ist vorteilhaft ein Zufuhranschluss 6 am Reformer vorgesehen, über den dem Reformer 1 zum Abtransport überschüssiger Wärme Luft zugeführt wird. Da Luft für den Reformer 1 und die Katalysatorstufe 3 in der Regel schädlich ist, sind diese bei dieser speziellen Ausführungsform der Lösungsvariante III edelmetallbeschichtet ausgebildet.

Konstuktiv ist bezüglich des Zufuhranschlusses 6 vorteilhaft vorgesehen, dass entweder die Edukte oder die Luft (je nach Betriebszustand) dem Reformer 1 über den Zufuhranschluss 6 zugeführt werden. Dabei sind dem Anschluss 6 einerseits für die Eduktzufuhr eine vorheizbare, mit Absperrmitteln 10 versehene Eduktzufuhrstrecke 2 und andererseits zur Bereitstellung einer ausreichenden Kühlluftmenge ein ebenfalls mit Absperrmitteln 10 pneumatisch abtrennbares Gebläse vorgeschaltet, d.h. sowohl die Eduktzufuhrstrecke 2 als auch die Gebläseleitung 22 münden bei dieser vorteilhaften Ausführungsform gemeinsam im Zufuhranschluss 6.

### Bezugszeichenliste

- 1: Reformer
- 2: Eduktzufuhrstrecke
- 3: Katalysatorstufe
- 4: Gasbrenner
- 5: Abgasführung
- 6: Zufuhranschluss
- 7: Wärmetauscher
- 8: Zuführung
- 9: Wärmetauscher
- 10: Absperrmittel
- 11: Verdampfer
- 12: Ringspaltraum
- 13: Ringspaltraum
- 14: Eduktzufuhranschluss
- 15: Spiralwärmetauscher
- 16: Wendelwärmetauscher
- 17: Stellklappe
- 18: Abgasabfuhranschluss
- 19: Verbindungsleitung
- 20: Luftanschluss
- 21: Verbindungsleitung
- 22: Gebläseleitung

## Patentansprüche

1. Verfahren zum Betrieb eines Apparats zur Erzeugung von Wasserstoff, bei dem im stationären Betrieb einem allotherm arbeitenden Reformer (1) über eine vorheizbare Eduktzufuhrstrecke (2) Kohlenwasserstoffgas und Wasser als Edukte zur Umwandlung in Wasserstoff und weitere Reformer-Produkte zugeführt werden, wobei dem Reformer (1) zur chemischen Aufbereitung der Reformer-Produkte mindestens eine Katalysatorstufe (3) nachgeschaltet ist,
**dadurch gekennzeichnet,**
**dass** zum Starten des Apparats dem Reformer (1) solange ausschließlich Wasser zugeführt wird, bis der allotherm arbeitende Reformer (1) und die mindestens eine Katalysatorstufe (3) Betriebstemperatur erreicht haben.

2. Verfahren nach Anspruch 1,
**dadurch gekennzeichnet,**
**dass** dem Reformer (1) das Wasser in der Startphase über die vorheizbare Eduktzufuhrstrecke (2) zugeführt wird.

3. Verfahren nach Anspruch 1 oder 2,
**dadurch gekennzeichnet,**
**dass** das Wasser zum Vorheizen des Apparats vor Eintritt in den Reformer (1) verdampft wird.

4. Verfahren zum Betrieb eines Apparats zur Erzeugung von Wasserstoff, bei dem im stationären Betrieb einem allotherm arbeitenden Reformer (1) Kohlenwasserstoffgas und Wasser als Edukte zur Umwandlung in Wasserstoff und weitere Reformer-Produkte zugeführt werden, wobei dem Reformer (1) zur chemischen Aufbereitung der Reformer-Produkte mindestens eine Katalysatorstufe (3) nachgeschaltet ist,
**dadurch gekennzeichnet,**
**dass** zum Starten des Apparats dem Reformer (1) über einen Zufuhranschluss (6) solange ausschließlich Luft zugeführt wird, bis der Reformer (1) und die mindestens eine edelmetallbeschichtete Katalysatorstufe (3) Betriebstemperatur erreicht haben.

5. Verfahren nach Anspruch 4,
**dadurch gekennzeichnet,**
**dass** wahlweise die Edukte oder die Luft dem Reformer (1) über den Zufuhranschluss (6) zugeführt werden.

6. Verfahren zum Betrieb eines Apparats zur Erzeugung von Wasserstoff, bei dem im stationären Betrieb einem mit einem Gasbrenner (4) beheizten Reformer (1) Kohlenwasserstoffgas und Wasser als Edukte zur Umwandlung in Wasserstoff und weitere Reformer-Produkte zugeführt werden, wobei dem Reformer (1) zur chemischen Aufbereitung der Reformer-Produkte mindestens eine Katalysatorstufe (3) nachgeschaltet ist, wobei zum Starten des Apparats solange vom Gasbrenner (4) kommendes Abgas über eine Abgasführung (5) der mindestens einen Katalysatorstufe (3) zugeführt wird, bis der Reformer (1) und die mindestens eine Katalysatorstufe (3) Betriebstemperatur erreicht haben,
**dadurch gekennzeichnet,**
**dass** beim Starten des Apparats dem Reformer (1) zum Schutz vor Überhitzung über einen Zufuhranschluss (6) zusätzlich Luft zugeführt wird.

7. Verfahren nach Anspruch 6,
**dadurch gekennzeichnet,**
**dass** wahlweise die Edukte oder die Luft dem Reformer (1) über den Zufuhranschluss (6) zugeführt werden.

8. Apparat zur Durchführung des Verfahrens nach Anspruch 6, umfassend einen allotherm arbeitenden, mit einem Gasbrenner (4) versehenen Reformer (1) zur Umwandlung von Kohlenwasserstoffgas und Wasser in Wasserstoff und weitere Reformer-Produkte, wobei dem Reformer (1) zur chemischen Aufbereitung der Reformer-Produkte mindestens eine Katalysatorstufe (3) nachgeschaltet ist, wobei eine dem Gasbrenner (4) nachgeschaltete Abgasführung (5) je nach Betriebszustand mit der mindestens einen Katalysatorstufe (3) verbindbar ausgebildet ist,
**dadurch gekennzeichnet,**
**dass** die Abgasführung (5) im Strömungsbereich der Reformer-Produkte zwischen dem Reformer (1) und der mindestens einen Katalysatorstufe (3) ausmündet.

9. Apparat nach Anspruch 8,
**dadurch gekennzeichnet,**
**dass** die Abgasführung (5) mit einer Stellklappe (17) zur Aufteilung des Abgasstroms in zwei Teilströme versehen ist, nämlich einen Teilstrom zur mindestens einen Katalysatorstufe (3) und einen Teilstrom zu einem Abgasabfuhranschluss (18) .

10. Apparat nach Anspruch 8 oder 9,
**dadurch gekennzeichnet ,**
**dass** am Reformer (1) ein Zufuhranschluss (6) vorgesehen ist, über den diesem während der Startphase des Apparats Luft zuführbar ist, wobei der Reformer (1) und die mindestens eine Katalysatorstufe (3) edelmetallbeschichtet ausgebildet sind.

11. Apparat nach Anspruch 10,
**dadurch gekennzeichnet,**
**dass** eine vorheizbare mit Absperrmitteln (10) versehene Eduktzufuhrstrecke (2) in den Zufuhranschluss (6) ausmündet, so dass wahlweise Luft oder Edukte über den Zufuhranschluss (6) dem Reformer (1) zuführbar sind.

12. Apparat nach Anspruch 10 oder 11,
**dadurch gekennzeichnet,**
**dass** der Zufuhranschluss (6) zur Bereitstellung von Luft am Reformer (1) mit einer Luftfördereinrichtung, vorzugsweise mit einem Gebläse, versehen ist.

## Claims

1. A Method for operation of an apparatus for the production of hydrogen, wherein, in steady state operation, are fed to an allotherm working reformer (1) via a preheatable reactant feed line (2) hydrocarbon gas and water as reactants for conversion into hydrogen and other reformer products wherein at least one catalyst stage (3) is downstream to the reformer (1), **characterized in that**, in startup of the apparatus as long as exclusively water is fed to the reformer, until the allotherm working reformer (1) and at least one catalyst stage (3) have reached operating temperature.

2. The method according to Claim 1, **characterized in that** in the startup phase the water is fed to the reformer (1) via the preheatable reactant input line (2).

3. The method according to Claim 1 or 2, **characterized in that** the water for preheating the apparatus is evaporated before entry into the reformer (1).

4. A Method for operation of an apparatus for the production of hydrogen in which in steady state operation to an allotherm working reformer (1) hydrocarbon gas and water are fed as reactants for conversion into hydrogen and other reformer products, wherein at least one catalyst stage (3) is downstream to the reformer (1), **characterized in that**, at startup of the apparatus, exclusively air is fed to the reformer (1) via inlet connection (6), until the reformer (1) and at least one noble metal catalyst stage have reached operating temperature.

5. The method according to Claim 4, **characterized in that** optionally the reactants or the air are fed to the reformer (1) via the inlet connection (6).

6. A Method for operation of an apparatus for the production of hydrogen, in which in steady state operation hydrocarbon gas and water as reactants for conversion into hydrogen and other reformer products are fed to a reformer (1) heated with a gas burner (4), wherein at least one catalyst stage (3) is connected downstream for the chemical preparation of the reformer products, wherein for startup of the apparatus as long as exhaust gas coming from the gas burner (4) is fed via an exhaust gas line (5) of the at least one catalyst stage (3) until the reformer (1) and the at least one catalyst stage (3) have reached operating temperature, **characterized in that** at startup of the apparatus additional air is fed to the reformer via an inlet connection (6) to protect it from overheating.

7. The method according to Claim 6, **characterized in that** optionally the reactants or the air are fed to the reformer (1) via the inlet connection (6).

8. An apparatus for carrying out the method according to Claim 6, comprising an allotherm working reformer (1) provided with a gas burner (4) for conversion of hydrocarbon gas and water into hydrogen and other reformer products, wherein at least one catalyst stage is connected downstream to the reformer (1) for the chemical preparation of the reformer products, wherein an exhaust gas line (5) is connected downstream to the gas burner (4), each according to the state of operations designed with at least one connectable catalyst stage (3), **characterized in that** the exhaust gas line (5) opens out into the flow region of the reformer products between the reformer (1) and the at least one catalyst stage.

9. The apparatus according to Claim 8, **characterized in that** the exhaust gas channel (5) is provided with a regulating valve (17) to divide the gas stream into two streams, that is to say one stream for at least one catalyst stage (3) and one stream for an exhaust gas outlet connection (18).

10. The apparatus according to Claim 8 or 9, **characterized in that**, an inlet connection (6) is provided to reformer (1), via which air may be supplied during the startup phase of the apparatus, wherein the reformer (1) and the at least one noble metal coated catalyst stage (3) are arranged.

11. The apparatus according to Claim 10, **characterized in that** a preheatable reactant feed line (2) provided with shutoff means (10), empties into the inlet connection, so that optionally air or reactants are transportable via the inlet connection (6) to the reformer (1).

12. The apparatus according to Claim 10, **characterized in that** the inlet connection (6) for supplying air to the reformer (1) is provided with an air-moving device, preferably a blower.

## Revendications

1. Procédé pour l'exploitation d'un appareil de production d'hydrogène, dans lequel, en fonctionnement stationnaire, du gaz hydrocarbure et de l'eau servant de réactifs pour la conversion en hydrogène et d'autres produits de reformage sont introduits dans un reformeur (1) fonctionnant de manière allotherme par une voie d'introduction de réactif (2) pré-chauffable,
dans lequel au moins un étage catalyseur (3) est branché en aval du reformeur (1) pour le traitement chimique des produits de reformage,
**caractérisé en ce que**,
au démarrage de l'appareil, exclusivement de l'eau est introduite dans le reformeur (1), jusqu'à ce que le reformeur (1) fonctionnant de manière allotherme et au moins un des étages catalyseurs (3) aient atteint une température d'exploitation.

2. Procédé selon la revendication 1,
**caractérisé en ce que**,
l'eau est introduite dans la reformeur (1) pendant la phase de démarrage par la voie d'introduction de réactif (2) pré-chauffable.

3. Procédé selon la revendication 1 ou 2,
**caractérisé en ce que**,
l'eau est évaporée avant l'entrée dans le reformeur (1) afin de préchauffer l'appareil.

4. Procédé pour l'exploitation d'un appareil de production d'hydrogène, dans lequel, en fonctionnement stationnaire, du gaz hydrocarbure et de l'eau servant de réactifs pour la conversion en hydrogène et d'autres produits de reformage sont introduits dans un reformeur (1) fonctionnant de manière allotherme par une voie d'introduction de réactif (2) pré-chauffable, dans lequel au moins un étage catalyseur (3) est branché en aval du reformeur (1) pour le traitement chimique des produits de reformage,
**caractérisé en ce que**,
au démarrage de l'appareil, exclusivement de l'air est introduit dans le reformeur (1) par un raccordement d'alimentation, jusqu'à ce que le reformeur (1) et au moins un des étages catalyseurs comportant un revêtement de métal noble aient atteint une température d'exploitation.

5. Procédé selon la revendication 4,
**caractérisé en ce que**,
les réactifs ou l'air au choix sont introduits dans le reformeur (1) par le raccordement d'alimentation (6).

6. Procédé pour l'exploitation d'un appareil de production d'hydrogène, dans lequel, en fonctionnement stationnaire, du gaz hydrocarbure et de l'eau servant de réactifs pour la conversion en hydrogène et d'autres produits de reformage sont introduits dans un reformeur (1) chauffé par un brûleur à gaz (4), dans lequel au moins un étage catalyseur est branché en aval du reformeur (1) pour le traitement chimique des produits de reformage, dans lequel au démarrage de l'appareil, du gaz de combustion provenant du brûleur à gaz (4) est introduit par un ventilateur de gaz de combustion (5) dans au moins un des étages catalyseurs (3), jusqu'à ce que le reformeur (1) et au moins un des étages catalyseurs (3) aient atteint une température d'exploitation,
**caractérisé en ce que**,
au démarrage de l'appareil, de l'air supplémentaire est introduit dans le reformeur (1) par un raccordement d'alimentation (6) comme mesure de protection contre une surchauffe.

7. Procédé selon la revendication 6,
**caractérisé en ce que**,
les réactifs ou l'air au choix sont introduits dans le reformeur (1) par le raccordement d'alimentation (6).

8. Appareil pour mettre en oeuvre le procédé selon la revendication 6, comprenant un reformeur (1) pourvu d'un brûleur à gaz (4), fonctionnant de manière allotherme pour la conversion de gaz hydrocarbure et d'eau en hydrogène et d'autres produits de reformage, dans lequel au moins un étage catalyseur (3) est branché en aval du reformeur (1) pour le traitement chimique des produits de reformage, dans lequel un ventilateur de gaz de combustion (5) branché en aval du brûleur à gaz (5) est configuré de manière à pouvoir être relié à au moins un des étages catalyseurs (3) en fonction de l'état d'exploitation,
**caractérisé en ce que**,
le ventilateur à gaz (5) débouche dans la zone d'écoulement des produits de reformage entre le reformeur (1) et au moins un des étages catalyseurs (3).

9. Appareil selon la revendication 8,
**caractérisé en ce que**,
le ventilateur à gaz (5) est pourvu d'une vanne papillon (17) pour diviser le courant de gaz de combustion en deux courants partiels, à savoir un courant partiel vers au moins un des étages catalyseurs (3) et un courant partiel vers un raccordement d'évacuation de gaz de combustion (18).

10. Appareil selon la revendication 8 ou 9,
**caractérisé en ce que**,
un raccordement d'alimentation (6) est prévu sur le reformeur (1), par lequel de l'air peut être introduit dans ledit reformeur pendant la phase de démarrage de l'appareil, moyennant quoi le reformeur (1) et au moins un des étages catalyseurs (3) sont configurés avec un revêtement de métal noble.

11. Appareil selon la revendication 10,
**caractérisé en ce que**,
une voie d'introduction de réactif (2) pré-chauffable, pourvue de moyens de blocage (10) débouche dans le raccordement d'alimentation (6), de telle sorte que de l'air ou des réactifs au choix puissent être introduits dans le reformeur (1) par le raccordement d'alimentation (6).

12. Appareil selon la revendication 10 ou 11,
**caractérisé en ce que**,
le raccordement d'alimentation (6) est pourvu d'un dispositif de transport d'air, de préférence d'un ventilateur, afin d'approvisionner le reformeur (1) en air.
